# EUROPEAN PATENT SPECIFICATION

(11) **EP 4 160 143 B1**
(45) Date of publication and mention of the grant of the patent: **19.03.2025**
(21) Application number: 22197177.3
(22) Date of filing: 22.09.2022
(51) Int. Cl.: G01C 15/00, G06F 3/01, G06T 19/00

(54) **SURVEY SYSTEM**
VERMESSUNGSSYSTEM
SYSTÈME D'ARPENTAGE

(30) Priority: 24.09.2021 JP 2021155915
(43) Date of publication of application: 05.04.2023
(73) Proprietor: TOPCON CORPORATION, Tokyo 174-8580 (JP)
(72) Inventor: Kikuchi, Takeshi, Itabashi-ku, 174-8580 (JP)
(74) Representative: dompatent von Kreisler Selting Werner - Partnerschaft von Patent- und Rechtsanwälten mbB

(56) References cited:
- WO-A1-2020/119912
- US-A1- 2013 162 469
- US-A1- 2017 337 743

## Description

### Technical Field

The present invention relates to a survey system that improves the work efficiency of a survey that is taken by a worker alone.

### Background Art

In recent years, there is an increasing number of cases where a worker takes a survey alone (one-man survey) (for example, Patent Literature 1) . A worker can take a survey alone by carrying a device including a display unit and an input unit with him/her, moving to a measurement point while holding a pole with a target, confirming the measurement point with the display unit of the device, and remotely instructing a surveying instrument to make distance and angle measurements by the input unit.
Patent Literature 2 describes a measurement system, e.g. comprising a total station and an auxiliary measurement instrument in the form of a pole, and/or an auxiliary measurement instrument, e.g. a pole, and/or a method for determining positions in the field of geodesics or on construction sites, e.g. by means of a construction laser.

### Citation List

### Patent Literature

Patent Literature 1: Japanese Published Unexamined Patent Application No. 2009-229350
Patent Literature 2: WO 2020/119912 A1

### Summary of Invention

### Technical Problem

However, this case has a problem in which a worker has to move while confirming the display unit of the device, and input a measurement command by the input unit to make measurements, so that a series of operations takes time.

The present invention was made to solve this problem, and provides a survey system that improves the work efficiency of a survey that is taken by a worker alone.

### Solution to Problem

The present invention is defined in claim 1.

Accordingly, with the eyewear device, a worker can confirm a measurement point superimposed on a landscape of a survey site, and further, with the controller attached to the pole, can send a command to the surveying instrument while gripping the pole. A worker can perform actions necessary for a survey without wasted motion, and the work efficiency of a survey by a worker alone is improved.

According to an aspect, the controller includes an attaching portion for attaching to the pole, and the input unit is a push switch, and the push switch is arranged so that a pushing direction is toward the attaching portion. According to this aspect, when the push switch of the controller attached to the pole is pushed, the push switch can be pushed against the pole. A stable state is ensured at the time of pushing and moving due to hand shake can be prevented, and the work efficiency of a survey by a worker alone is improved.

According to an aspect, the input unit is arranged to enable a worker to make inputs within a range of motion of at least the worker's thumb and index finger while gripping the pole in a state where the worker supports the pole to which the controller is attached. According to this aspect, a worker can input a command within a range of motion of the worker's thumb and index finger, so that the worker can grip the pole with the remaining three fingers and palm. The configuration makes it easy for a worker to input a command while the worker grips the pole, and improves the work efficiency.

According to an aspect, the surveying instrument (2) includes a tracking unit configured to automatically track the target, and is configured so that the target is automatically tracked when the target is within a predetermined range from the measurement point, and position information of the target is displayed in real time on the display. According to this aspect, in a state where the target is locked on to, detailed information is added, so that with high accuracy, the pole can be installed at a measurement position in a short time.

According to an aspect, the storage unit and the arithmetic processing unit are included in the surveying instrument. By including these software-wise or hardware-wise in the surveying instrument, components can be reduced. Settings can be made with the surveying instrument, so that the entire configuration can be simplified.

### Advantageous Effects of Invention

As is clear from the above description, according to the present invention, a survey system that improves the work efficiency of a survey by a worker alone can be provided. Brief Description of Drawings

FIG. 1 is a schematic configuration diagram of a survey system according to an embodiment of the present invention.
FIG. 2 is a configuration block diagram of the same survey system.
FIG. 3 is a configuration block diagram of a surveying instrument related to the same survey system.
FIG. 4 is an external perspective view of a controller.
FIG. 5 illustrates a controller attached to a pole and gripped (used) by a worker.
FIG. 6 is a configuration block diagram of the controller.
FIG. 7 is an external perspective view of an eyewear device.
FIG. 8 is a configuration block diagram of the same eyewear device.
FIG. 9 is a configuration block diagram of a processing PC.
FIG. 10 is a process flowchart of the survey system.
FIG. 11 is a drawing describing initial settings (steps S102 to S105) in the same process flow.
FIG. 12 illustrates an example of an image that a worker visually recognizes through the eyewear device.
FIGS. 13A, 13B, and 13C illustrate examples of images that a worker visually recognizes through the eyewear device.
FIG. 14 is an external perspective view of Modification 1.
FIG. 15 illustrates a usage state of Modification 1.
FIG. 16 is an external perspective view of Modification 2.
FIG. 17 illustrates a usage state of Modification 2.

### Description of Embodiments

Hereinafter, a detailed embodiment of a configuration of the present disclosure will be described with reference to the drawings. The embodiment is not intended to limit the invention but just an example, and all features described in the embodiment and combinations thereof are not always essential to the invention. Components having the same configuration are provided with the same reference signs, and overlapping description thereof will be omitted.

### (Embodiment)

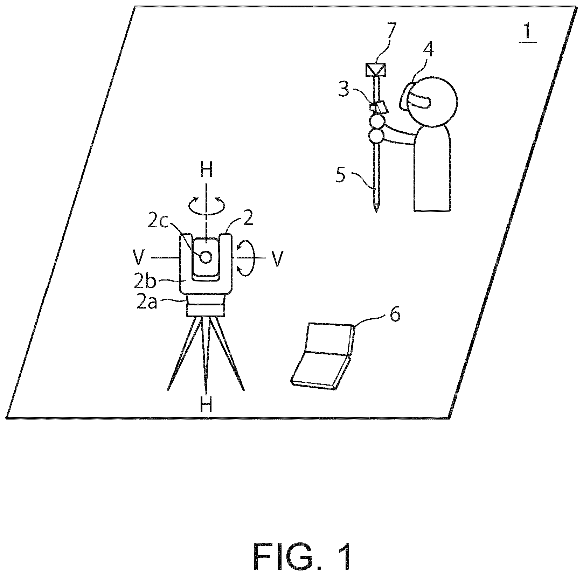

FIG. 1 is an external perspective view of a survey system 1 according to a preferred embodiment of the present invention, and illustrates a work image at a survey site. The survey system 1 according to the present embodiment includes a pole 5 to which a target 7 and a controller 3 are attached, a surveying instrument 2, a processing PC 6, and an eyewear device 4.

The surveying instrument 2 is installed on a reference point center by using a tripod. The surveying instrument 2 includes a base portion 2a provided on a leveling device, a bracket portion 2b that rotates on the base portion 2a horizontally around an axis H-H, and a telescope 2c that rotates vertically around an axis V-V at a center of the bracket portion 2b.

The eyewear device 4 is worn on the head of a worker. The processing PC 6 is installed at a survey site.

The pole 5 is used in a state where its lower end is installed substantially vertically on a measurement point. The target 7 is a surveying target of the surveying instrument 2, and has optical characteristics that retro-reflects light incident from all directions. The target is attached so that an optical center (optical reflection point) of the target 7 is set on a central axis of the pole 5, and an attaching height (distance from the lower end of the pole 5 to the optical center) is known.

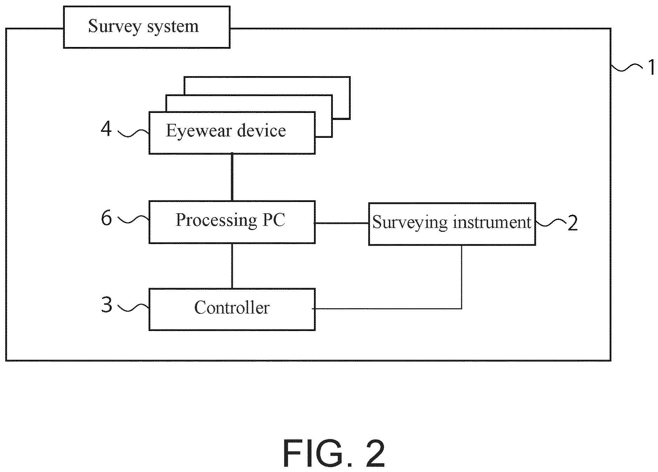

FIG. 2 is a configuration block diagram of the survey system 1. In the survey system 1, the eyewear device 4, the surveying instrument 2, and the controller 3 are wirelessly connected (can also be connected by wire) to the processing PC 6. The controller 3 is a remote operation device for the surveying instrument 2, and is configured to transmit commands wirelessly to the surveying instrument 2 from a remote location. The controller 3 may also be configured to transmit and receive information to and from the surveying instrument 2 through the processing PC 6. In the present embodiment, the number of workers is assumed to be one, however, the number of eyewear devices 4 is not particularly limited, and may be one or plural in number. When a plurality of eyewear devices 4 are used, the respective eyewear devices 4 are configured to be distinguishable by their unique IDs, etc.

### (Surveying Instrument 2)

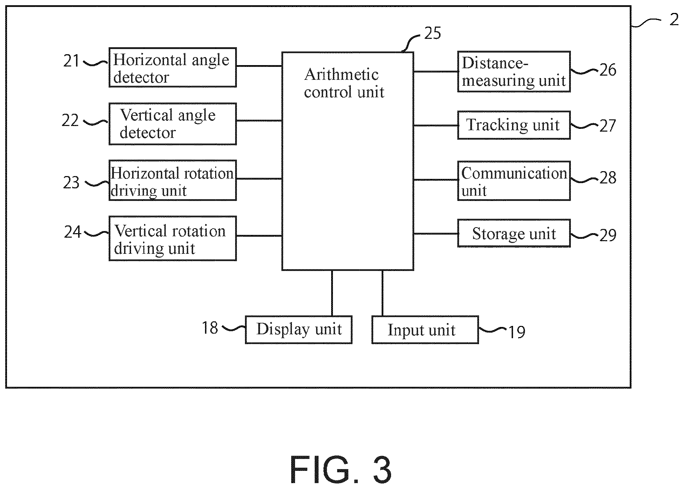

FIG. 3 is a configuration block diagram of the surveying instrument 2. The surveying instrument 2 is a motor-driven total station, and includes a horizontal angle detector 21, a vertical angle detector 22, a horizontal rotation driving unit 23, a vertical rotation driving unit 24, an arithmetic control unit 25, a distance-measuring unit 26, a tracking unit 27, a communication unit 28, a storage unit 29, a display unit 18, and an input unit 19.

The horizontal angle detector 21 and the vertical angle detector 22 are encoders. The horizontal angle detector 21 is provided on a rotation shaft of the bracket portion 2b, and detects a horizontal angle of the bracket portion 2b. The vertical angle detector 22 is provided on a rotation shaft of the telescope 2c, and detects a vertical angle of the telescope 2c.

The horizontal rotation driving unit 23 and the vertical rotation driving unit 24 are motors. The horizontal rotation driving unit 23 drives the rotation shaft of the bracket portion 2b, and the vertical rotation driving unit 24 drives the rotation shaft of the telescope 2c. By collaboration of both driving units, the orientation of the telescope 2c is changed. The horizontal angle detector 21 and the vertical angle detector 22 constitute an angle-measuring unit. The horizontal rotation driving unit 23 and the vertical rotation driving unit 24 constitute a driving unit.

The distance-measuring unit 26 includes a light transmitting unit and a light receiving unit, and outputs distance-measuring light, for example, infrared pulsed laser, etc., from the light transmitting unit, receives reflected light of the distance-measuring light by the light receiving unit, and measures a distance from a phase difference between the distance-measuring light and internal reference light. The distance-measuring unit can make not only a prism measurement but also a non-prism measurement.

The tracking unit 27 includes a tracking light transmitting system that outputs, as tracking light, infrared laser, etc., of a wavelength different from that of the distance-measuring light, and a tracking light receiving system including an image sensor such as a CCD sensor or CMOS sensor. The tracking unit 27 acquires a landscape image including the tracking light and a landscape image excluding the tracking light, and transmits both images to the arithmetic control unit 25. The arithmetic control unit 25 obtains a center of a target image from a difference between the images, detects a position where a deviation between a center of the target image and a visual axis center of the telescope 2c falls within a certain value as a position of the target, and performs automatic tracking to cause the telescope 2c to always face the target.

The communication unit 28 enables communication with an external network, and for example, connects to the Internet by using an internet protocol (TCP/IP) and transmits and receives information to and from the processing PC 6 and the controller 3. The wireless communication is not limited to this, and known wireless communication can be used. Measurement results (distance and angle measurements) made by the surveying instrument 2 are transmitted to the processing PC 6 through the communication unit 28.

The arithmetic control unit 25 is a microcontroller including a CPU, and performs, as controls, information transmission and reception through the communication unit 28, driving of the respective rotation shafts by the horizontal rotation driving unit 23 and the vertical rotation driving unit 24, a distance measurement by the distance-measuring unit 26, angle measurements by the horizontal angle detector 21 and the vertical angle detector 22, and automatic tracking by the tracking unit 27.

The storage unit 29 includes a ROM and a RAM. In the ROM, programs for the arithmetic control unit 25 are stored, and the respective controls are performed in the RAM.

The display unit 18 and the input unit 19 are interfaces of the surveying instrument 2. The input unit includes a power key, numeric keys, and an execution key, etc., and with the input unit, a worker can operate the surveying instrument 2 and input information into the surveying instrument 2. In the present embodiment, commands of a surveying work and result confirmation can also be performed with the processing PC 6 through the communication unit 28. In addition, commands for the surveying instrument 2 can also be issued from the controller 3.

### (Controller 3)

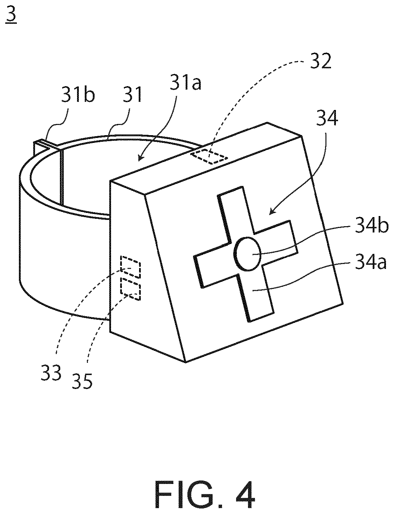

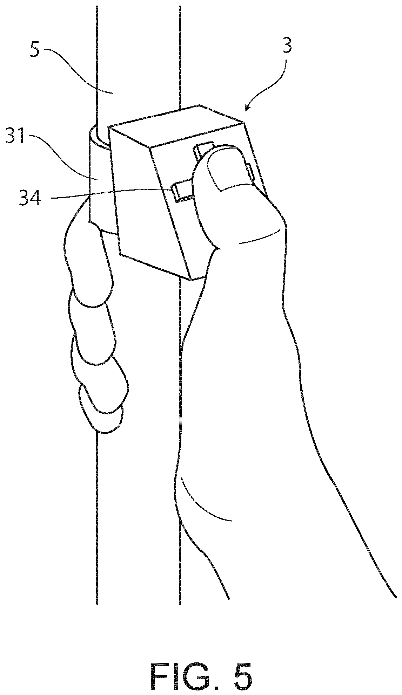

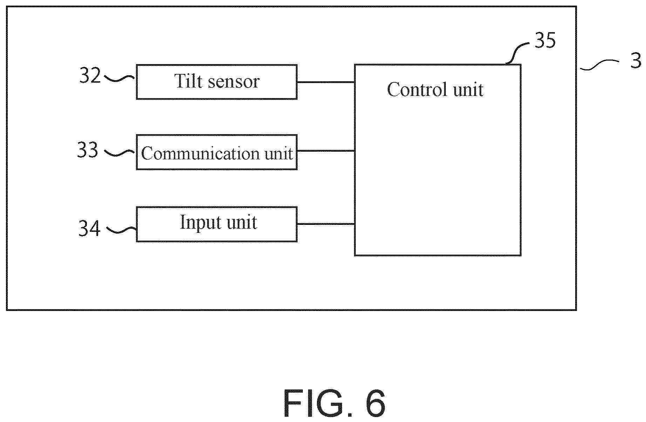

FIG. 4 is an external view of the controller 3. FIG. 5 illustrates a usage state of the controller 3, and illustrates a state where the controller 3 is attached to the pole 5 and a user grips the pole 5. FIG. 6 is a configuration block diagram of the controller 3.

The controller 3 includes an attaching portion 31 to be detachably attached to a rod-shaped pole 5, and the pole 5 is inserted through an insertion hole 31a of the attaching portion 31, and the attaching portion 31 is detachably fixed to a desired height position of the pole 5 by a fastening portion 31b.

The controller 3 is a remote operation device for the surveying instrument 2, and includes a tilt sensor 32, a communication unit 33, an input unit 34, and a control unit 35.

The communication unit 33 has a configuration equivalent to the configuration of the communication unit 28, and can transmit and receive information to and from the surveying instrument 2 and the processing PC 6. The communication unit 33 may transmit and receive information to and from the eyewear device 4.

The tilt sensor 32 is a sensor to measure a tilt angle from a reference state. In the present embodiment, the tilt sensor 32 consists of an accelerometer capable of measuring an acceleration, and can measure both of a tilt around one direction along a horizontal plane, and a tilt around another direction orthogonal to the one direction along the horizontal plane by measuring a gravitational acceleration by using horizontality as a reference. The controller 3 is used while being attached to the pole 5, so that the tilt sensor 32 measures a tilt from verticality of the pole 5 to which the tilt sensor itself is attached. The measurement results are transmitted by the communication unit 33 to the eyewear device 4 through the processing PC 6, and are displayed in the form of an electronic bubble tube.

The input unit 34 is a push switch for operation, consisting of a cross-shaped key 34a and a circular switch 34b arranged at a center of the cross-shaped key 34a, and is configured to enable selection, determination, and cancellation of commands by the plurality of switches. An input command is transmitted to the surveying instrument 2.

The control unit 35 is a microcomputer configured by mounting at least a CPU and a memory (RAM, ROM) on an integrated circuit. The control unit 35 outputs measurement results of the tilt sensor 32 and information input by the input unit 34 to the processing PC 6 or the surveying instrument through the communication unit 33.

The controller 3 is configured to be so small and compact that it entirely fits in the palm of a hand. The input unit 34 is provided near the insertion hole 31a, and on a front surface of a housing of the controller 3, the plurality of switches for inputs are respectively arranged within about 5 cm from a nearest housing outer edge. This is a position where the worker's thumb is placed on (within a range of motion of the worker's thumb) in a state where the worker grips the pole 5. Therefore, the worker can operate the input unit 34 while gripping the pole 5. The controller 3 is configured so that, while the worker grips the pole 5 with at least several fingers and the palm of one hand, the worker can perform switch operations with the remaining fingers (in the present embodiment, thumb) . Accordingly, when the worker holds the pole 5 and determines a measurement point Y, the worker can send a command to make measurements (distance and angle measurements) to the surveying instrument 2 without changing the posture. The pole 5 is prevented from being tilted by a worker's action to send a command to the surveying instrument 2. The worker can perform a series of actions while gripping the pole 5 with both hands without removing his/her gaze. The input unit 34 is a push switch, and determination can be made intuitively in a recognizable manner. The worker grips the pole 5 with both hands and can position it without fail, and can push the switch even without changing the posture. Therefore, the pole 5 can be prevented from tilting. Actions which are inherently not related to the survey are omitted, and the surveying process can be efficiently performed in a manner that can shorten the time and is user-friendly.

In the present embodiment, a pushing direction of the switches of the input unit 34 is a direction toward the attaching portion 31, particularly toward the insertion hole 31a (pole 5 in a usage state). In this way, the switches are preferably configured to be pressed against the pole 5 by a finger when the controller 3 is attached to the pole 5. This is because, in the configuration in which a worker pushes the switches against the pole 5 that the worker grips and fixes, the worker can easily operate the switches and can be prevented from taking a tilted posture due to the pushing action. The front surface of the housing on which the input unit 34 including operation switches is provided is slightly tilted from verticality, and the input unit is provided according to a position where the thumb is naturally placed when the worker grips the pole 5, and is configured so that the worker can more easily push the switches. Decreasing a necessary pushing force is also preferable since this makes it easier for the worker to push the switches. A configuration in which a determination switch is arranged on a back surface so that the worker can operate the switch with the index finger and the thumb improves the operability, and is preferable. A configuration in which a speaker or a light emitting unit (LED) is provided to produce sounds or light according to an operation makes it possible for a worker to confirm the input, and is preferable.

### (Eyewear Device 4)

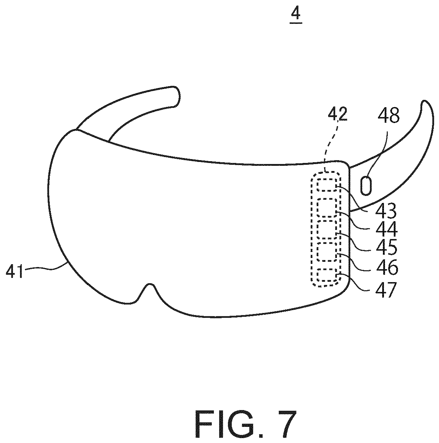

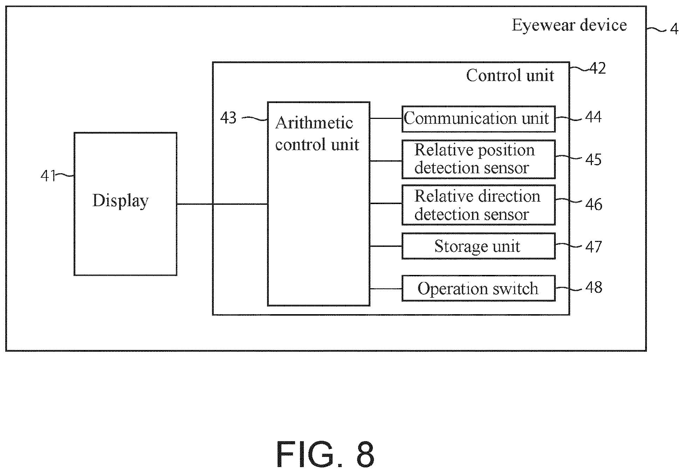

FIG. 7 is an external perspective view of the eyewear device 4. FIG. 8 is a configuration block diagram of the eyewear device 4.

The eyewear device 4 is a wearable device to be worn on the head of a worker, and includes a display 41, a control unit 42, an arithmetic control unit 43, a communication unit 44, a relative position detection sensor 45, a relative direction detection sensor 46, a storage unit 47, and an operation switch 48.

The display 41 is a goggles-lens-shaped transmissive display that covers the eyes of a worker when the worker wears it. As an example, the display 41 is an optical see-through display using a half mirror, and is configured to enable observation of a video image obtained by superimposing and synthesizing a virtual image received by the control unit 42 on a real image of a landscape of the site (hereinafter, referred to as "actual landscape").

The communication unit 44 has a configuration equivalent to the configuration of the communication unit described above, and transmits and receives information to and from the surveying instrument 2 and the processing PC 6.

The relative position detection sensor 45 performs wireless positioning from a GPS antenna, a Wi-Fi (registered trademark) access point, and an ultrasonic oscillator, etc., installed at the survey site, to detect a position of the eyewear device 4 at the survey site.

The relative direction detection sensor 46 consists of a combination of a triaxial accelerometer or a gyro sensor and a tilt sensor. The relative direction detection sensor 46 detects a tilt of the eyewear device 4 by setting the up-down direction as a Z axis, the left-right direction as a Y axis, and the front-rear direction as an X axis.

The storage unit 47 is, for example, a memory card. The storage unit 47 stores programs for the arithmetic control unit 43 of the eyewear device 4 to execute functions. The operation switch 48 is, for example, a power button for turning ON/OFF a power supply of the eyewear device 4.

The control unit 42 is a microcomputer configured by mounting at least a CPU and a memory (RAM, ROM) on an integrated circuit. The arithmetic control unit 43 outputs information on a position and a direction of the eyewear device 4 detected by the relative position detection sensor 45 and the relative direction detection sensor 46 to the processing PC 6 through the communication unit 44. In addition, the arithmetic control unit 43 receives position data of the measurement points Y from the processing PC 6 and superimposes and displays the position data on the landscape of the site on the display 41. In addition, the arithmetic control unit 43 displays a measurement result of the tilt sensor 32 of the controller 3 in the form of an electronic bubble tube.

### (Processing PC 6)

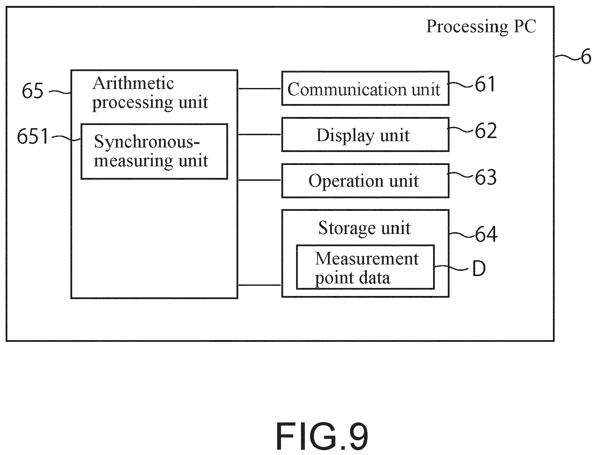

FIG. 9 is a configuration block diagram of the processing PC 6. The processing PC 6 is a general-purpose personal computer, a dedicated hardware using a PLD (Programmable Logic Device), etc., a tablet terminal, or a smartphone, etc. The processing PC 6 includes a communication unit 61, a display unit 62, an operation unit 63, a storage unit 64, and an arithmetic processing unit 65.

The communication unit 61 has a structure equivalent to the structure of the communication unit described above, and transmits and receives information to and from the surveying instrument 2 and the eyewear device 4.

The display unit 62 is, for example, a liquid crystal display. The operation unit 63 is a keyboard, a mouse, etc., and enables various inputs, selections, and determinations.

The storage unit 64 is, for example, an HDD drive. The storage unit 64 stores information on a survey site, including at least measurement point data D as coordinate data of measurement points Y (Y1, Y2, Y3...) to be measured at the survey site.

The arithmetic processing unit 65 is a control unit configured by mounting at least a CPU and a memory (RAM, ROM, etc.) on an integrated circuit. In the arithmetic processing unit 65, a synchronous-measuring unit 651 is configured software-wise.

The synchronous-measuring unit 651 receives information on a position and a direction of the surveying instrument 2 and information on a position and a direction of the eyewear device 4, and converts the information so that a coordinate space of the surveying instrument 2, a coordinate space of the measurement point data D, and a coordinate space of the eyewear device 4 match each other, and transmits the information to the eyewear device 4.

Hereinafter, an operation to match coordinate spaces of information on positions and directions in devices or data having different coordinate spaces, and manage relative positions and relative directions related to the respective devices in a space with an origin set at a common reference point, is referred to as synchronization.

### (Measuring Method)

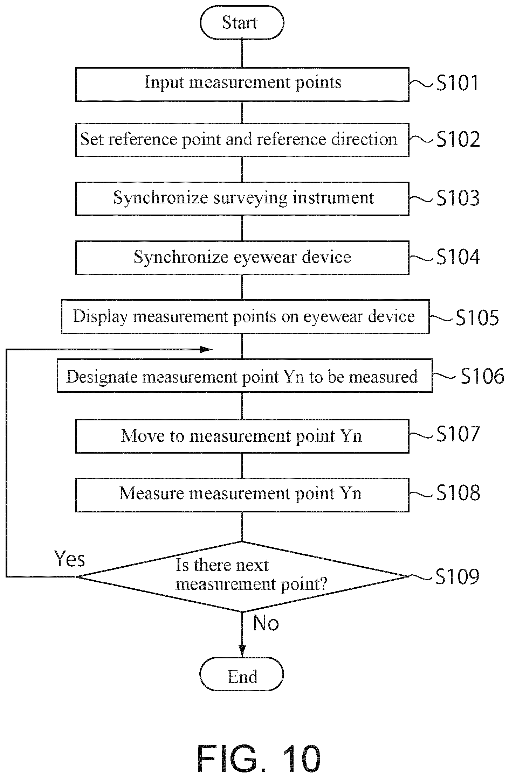

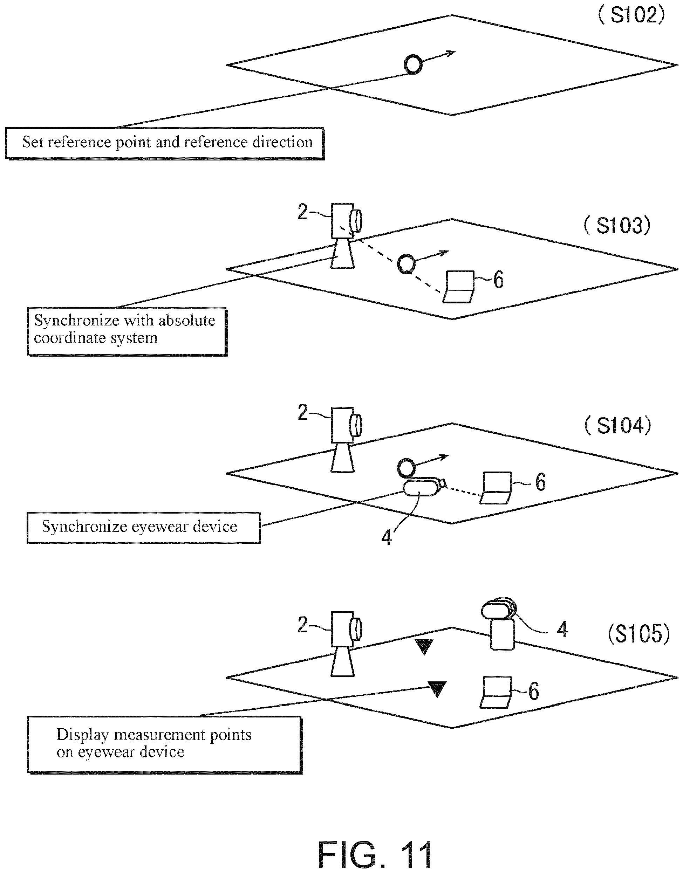

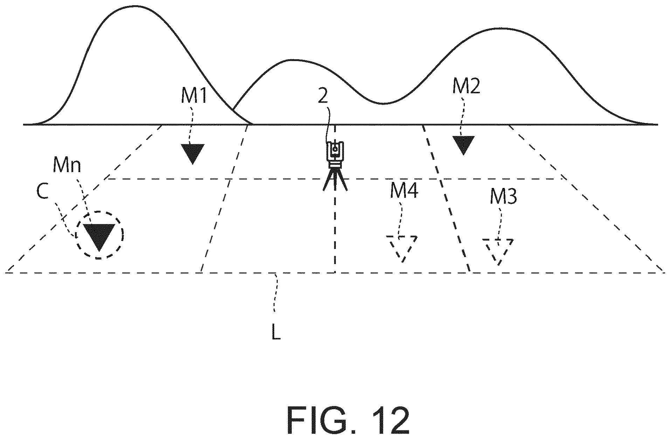

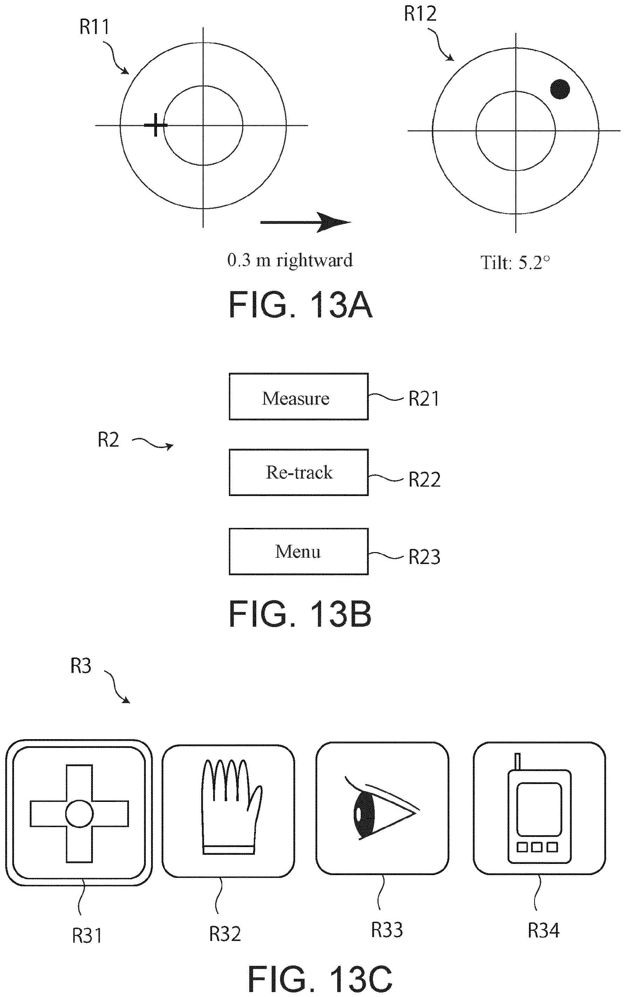

Next, an example of use of the survey system 1 (staking work) will be described. FIG. 10 illustrates a process flowchart of the work using the survey system 1. FIG. 11 is a work image view of Steps S102 to S105. FIG. 12 and FIGS. 13A, 13B, and 13C illustrate examples of images viewed from the eyewear device 4 according to the survey system 1.

First, in Step S101, as pre-processing, a worker inputs information on a survey site including CAD data and measurement point data D for staking into the processing PC 6. The input information is stored in the storage unit 64 of the processing PC 6.

Next, the processing shifts to Step S102, and the worker sets a reference point and a reference direction at the survey site. As the reference point, an arbitrary point within the site such as prescribed coordinates is selected. As the reference direction, a direction from a reference point to a characteristic point is set after arbitrarily selecting the characteristic point different from the reference point.

Next, the processing shifts to Step S103, and the worker synchronizes the surveying instrument 2. Specifically, the worker installs the surveying instrument 2 at the reference point at the site, and grasps absolute coordinates of the surveying instrument 2 by observation of backward intersection, etc., including the reference point and the characteristic point. The surveying instrument 2 transmits the coordinate information to the processing PC 6. The synchronous-measuring unit 651 of the processing PC 6 converts absolute coordinates of the reference point into (x, y, z) = (0, 0, 0), and recognizes the reference direction as a horizontal angle of 0 degrees, and thereafter, concerning information from the surveying instrument 2, manages a relative position and a relative direction of the surveying instrument 2 in a space with an origin set at the reference point.

Next, the processing shifts to Step S104, and the worker synchronizes the eyewear device 4. Specifically, the worker installs the eyewear device 4 at the reference point, matches a center of the display 41 with the reference direction, and sets (x, y, z) of the relative position detection sensor 45 to (0, 0, 0) and sets (roll, pitch, yaw) of the relative direction detection sensor 46 to (0, 0, 0). Thereafter, concerning data acquired from the eyewear device 4, the synchronous-measuring unit 651 of the processing PC 6 manages a relative position and a relative direction of the eyewear device 4 in the space with an origin set at the reference point. As a result, a relative position and a relative direction of the eyewear device 4 are also managed in the space with an origin set at the reference point.

Synchronization of the eyewear device 4 is not limited to the method described above, and may be performed, for example, in such a manner that the eyewear device 4 is provided with a laser device for indicating a center and a directional axis of the eyewear device 4, and by using a laser as a guide, the center and the directional axis are matched with the reference point and the reference direction.

Alternatively, it is also possible that a storing position for the eyewear device 4 is provided in the surveying instrument 2, and a relative relationship between the eyewear device 4 and the surveying instrument 2 is determined in advance, and by starting synchronization in a state where the eyewear device 4 is stored in the storing position of the surveying instrument 2, they are synchronized based on the relative relationship.

Next, the processing shifts to Step S105, and the synchronized measurement point data D is displayed on the display 41 of the eyewear device 4. When the worker wears the eyewear device 4 and views the inside of the survey site, a relative position and a relative direction of the eyewear device 4 to the actual landscape are managed by the processing PC 6, so that from the processing PC 6, the measurement point data D synchronized with the actual landscape (real image of a landscape viewed through the display 41) is displayed as a virtual image on the eyewear device 4.

FIG. 12 illustrates an example of display viewed through the display 41 by the worker wearing the eyewear device 4. The actual landscape is illustrated with solid lines, and the virtual image is illustrated with dashed lines. As illustrated in FIG. 12, the worker wearing the eyewear device 4 can confirm the measurement points Y superimposed on the actual landscape. That is, the measurement points Y (Y1, Y2, Y3...) are synchronized and displayed so as to be visually recognized as inverted triangular marks M (M1, M2, M3...) of virtual images at corresponding positions in accordance with the site. Lines L are displayed in a matrix at intervals of a predetermined distance from an arbitrary point (installation point of the surveying instrument 2 in FIG. 12). The inverted triangular marks (M1, M2, M3...) are preferably recognizably displayed in such a manner that an unmeasured point and a measured point are distinguished by being colored in different colors, and the longer the distance from the worker (eyewear device 4) is, the smaller the displayed mark is.

Next, the processing shifts to Step S106, and a measurement point Yn (staking point) to be measured next is determined. The worker grips the pole 5 to which the controller 3 is attached, and among the inverted triangular marks M (M1, M2, M3...) displayed as the measurement points Y (Y1, Y2, Y3...) on the display 41, selects and determines one inverted triangular mark Mn as a next measurement point Yn with the input unit 34. Marks are displayed in a recognizable way such that, for example, the selected inverted triangular mark Mn flashes on the display 41, and after it is determined as a next measurement point Yn, this inverted triangular mark Mn is circled by a circle C. The surveying instrument 2 directs the telescope 2c toward the determined measurement point Yn.

Next, the processing shifts to Step S107, and while gripping the pole 5, the worker moves to the measurement point Yn to be measured. When the target 7 approaches a predetermined range (approximately 1 m) from the measurement point Yn, the target 7 is locked on to by the surveying instrument 2, and the tracking unit 27 starts automatic tracking. FIG. 13A illustrates a virtual image added to the display 41 when the target 7 is locked on to. FIGS. 13A, 13B, and 13C illustrate images all of which are virtual images to be displayed on the display 41, and are illustrated with solid lines. As detailed position information of the target 7, a detailed image R11 indicating a distance and a direction to the measurement point Yn and an image R12 of an electronic bubble tube indicating a tilt of the pole 5 are displayed on the display 41. Preferably, the electronic bubble tube changes in color according to a magnitude of the tilt. During tracking, data is transmitted as needed, and a position of the target 7 and a tilt of the pole 5 are displayed in real time on the display 41.

Without limitation to the above and depending on the situation, images may also be displayed on the display 41 for commands that can be input. FIG. 13B illustrates, as an example, added images during tracking. Images are displayed by using only characters, such as an image R21 of "Measure" that commands the surveying instrument 2 to make distance and angle measurements, an image R22 of "Re-track" in the case where lock on the target 7 is released, and an image R23 of "Menu" for transition to a menu image. A selected command is displayed recognizably to the worker by highlighting, etc.

Images R3 illustrated in FIG. 13C are examples of menu content, and indicate control devices to be connected, and are displayed as icons on the display 41. For example, an image R31 indicates a controller 3. An image R32 indicates a glove-shaped control device. With this device, a command can be input into the surveying instrument from a sensor provided in a glove based on motion of a hand. An image R33 indicates an eye sensor that is added as an option to the eyewear device 4, and a command can be input according to motion of an eye. An image R34 indicates a control device configured as a separate body such as a smartphone or dedicated terminal. This device includes a display and a switch, and inputs can be made from the switch.

In addition to the controller 3, the survey system 1 can include one or more devices (control devices) capable of inputting commands, and can be simultaneously connected to a plurality of devices, and commands can be input from any one of the connected devices. In the present embodiment, the controller 3 is connected as a control device of the surveying instrument 2, and the image R31 is highlighted to indicate the connection. By configuring the survey system 1 to allow the surveying instrument 2 to be connected to a plurality of control devices, a comfortable work environment can be established according to the skill level of the worker and compatibility with the device.

Next, the processing shifts to Step S108, and the worker grasps a detailed position based on the images R1 and R2 displayed on the display 41 and a tilt of the pole 5, and erects the pole 5 substantially vertically on the measurement point Yn. When the worker sends a command to start measurements to the surveying instrument 2 by pushing the input unit 34 (circular switch 34b) of the controller 3 without changing the posture, the surveying instrument 2 starts distance and angle measurements, and measurement results are transmitted to the processing PC 6.

Next, when the measurements of the measurement point are completed in Step S109, measurement data are transmitted to the processing PC 6, and for selecting a measurement point Yn to be measured next, the processing shifts to Step S106, and Steps S106 to S109 are repeated until measurements of all measurement points Y are completed. After measurements of all measurement points Y are completed, the processing ends.

### (Operation and Effect)

As described above, according to the survey system 1, measurement points Y (Y1, Y2, Y3...) are displayed on the eyewear device 4, and a worker can grasp a position superimposed on an actual landscape. The worker can also input commands while gripping the pole 5. Wasteful action is omitted, and a survey by a worker alone is improved in efficiency. Unlike the conventional case, the worker does not have to carry a device including a display, turn his/her gaze to the display to perform a device operation, move a hand to make inputs, and support the pole with one hand. In response to push motions, commands and instructions are immediately executed without fail. The worker can seamlessly perform a series of work for a survey alone, and the work efficiency is improved.

### (Modification 1)

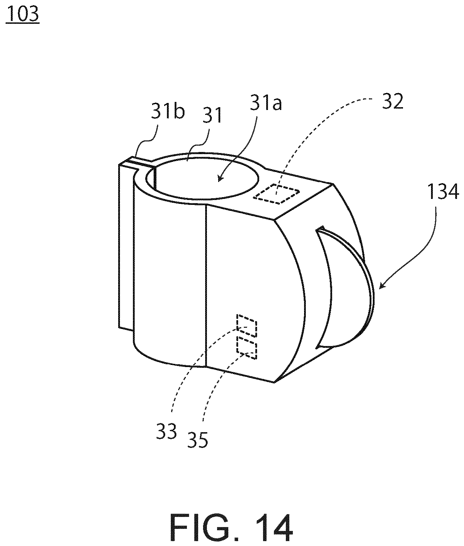

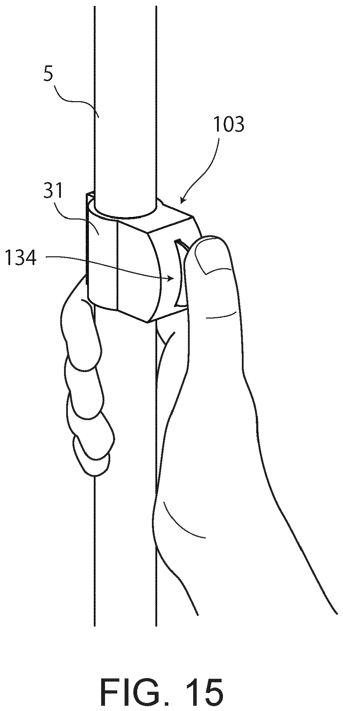

FIG. 14 is an external perspective view of a controller 103 according to a modification of the embodiment. FIG. 15 illustrates a usage state of the controller 103. Components having the same configuration are provided with the same reference signs, and description thereof will be omitted.

The controller 103 has a configuration substantially equivalent to the configuration of the controller 3, and an input unit 134 uses a wheel switch. The wheel switch is configured by axially supporting, biasing, and holding a wheel (rotary disc) as a switch main body so as to enable a plurality of input operations. For example, "Selection" is input in response to rotation of the wheel, "Determination" is input in response to pressing the wheel, and "Cancellation" is input in response to pressing and holding the wheel. These inputs are just examples, and inputs are not limited to these. A worker can make inputs with the controller 103 by one thumb while gripping the pole 5, and can easily remotely operate the surveying instrument 2.

### (Modification 2)

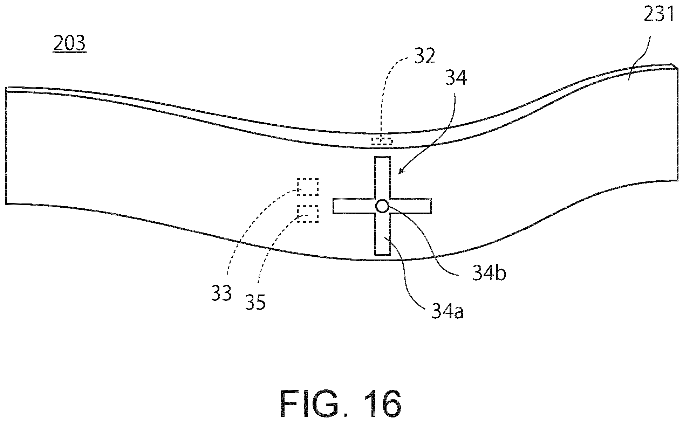

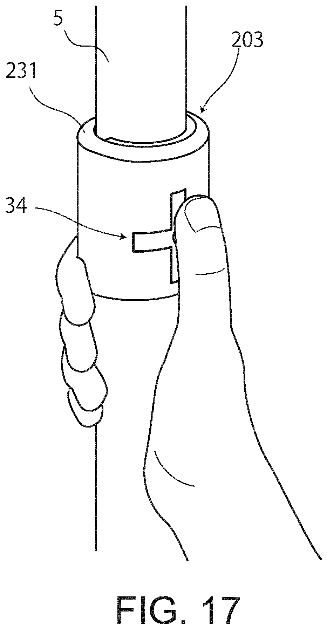

FIG. 16 is an external perspective view of a controller 203 according to another modification of the embodiment. FIG. 17 illustrates a usage state of the controller 203. Components having the same configuration as the above-described are provided with the same reference signs, and description thereof will be omitted.

The controller 203 has an outer sheath formed of a sheet made of a resin member with flexibility, and has an external appearance having a belt shape long in one direction, and is entirely freely deformable. At a surface center, an input unit 34 is provided, and devices are incorporated in the inside covered by the sheet. During use, attaching portions 231 extending from the center to end portions are wound around the pole 5. On back surfaces of the attaching portions 231, hook and loop fasteners are provided, and the controller 203 is easily detachably attached to the pole 5. The controller 203 is easily attached regardless of a thickness of the pole 5.

A preferred embodiment of the present invention has been described above, however, the embodiment described above is just an example of the present invention. For example, the arithmetic processing unit 65 and the storage unit 64 may be included in the surveying instrument 2. Accordingly, the functions of the processing PC 6 can be integrated with the surveying instrument 2, the settings can be easily made, and the surveying instrument 2 can be easily carried and moved.

### Reference Signs List

- 1:: Survey system
- 2:: Surveying instrument
- 3:: Controller
- 4:: Eyewear device
- 5:: Pole
- 6:: Processing PC
- 7:: Target
- 21:: Horizontal angle detector
- 22:: Vertical angle detector
- 23:: Horizontal rotation driving unit
- 24:: Vertical rotation driving unit
- 25:: Arithmetic control unit
- 26:: Distance-measuring unit
- 27:: Tracking unit
- 28:: Communication unit
- 29:: Storage unit
- 31:: Attaching portion
- 33:: Communication unit
- 34:: Input unit
- 41:: Display
- 42:: Control unit
- 43:: Arithmetic control unit
- 44:: Communication unit
- 45:: Relative position detection sensor
- 46:: Relative direction detection sensor
- 61:: Communication unit
- 64:: Storage unit
- 65:: Arithmetic processing unit
- 651:: Synchronous-measuring unit
- Y:: Measurement point

## Claims

1. A survey system (1) comprising:
a target (7); a pole (5) to which the target (7) is attached;
a surveying instrument (2) including a distance-measuring unit (26) configured to measure a distance to the target (7), an angle-measuring unit (21, 22) configured to measure a vertical angle and a horizontal angle at which the distance-measuring unit (26) faces, a driving unit (23, 24) configured to drive a vertical angle and a horizontal angle of the distance-measuring unit (26) to set angles, a communication unit (28), and an arithmetic control unit (25) configured to execute input commands, and capable of making distance and angle measurements of the target (7);
a controller (3) detachably attached to the pole (5), including a communication unit (33) and an input unit (34) for inputting commands by a worker, and configured to transmit commands to the surveying instrument (2) by communicating with the surveying instrument (2);
an eyewear device (4) including a communication unit (44), a display (41) that is a goggles-lens-shaped transmissive display that covers eyes of the worker, a relative position detection sensor (45) configured to detect a position of the eyewear device in the space with an origin set at a reference point, and a relative direction detection sensor (46) configured to detect a direction of the eyewear device in the space with an origin set at the reference point;
a storage unit (64) configured to store a measurement point at a survey site; and
an arithmetic processing unit (65) including a synchronous-measuring unit (651) configured to receive information on a position and a direction of the eyewear device (4) and synchronize the information with coordinates of the measurement point, **characterized in that**
the surveying instrument is installed by the worker at the reference point at the survey site,
the eyewear device is configured to enable observation of a video image obtained by superimposing and synthesizing a virtual image on a real image of a landscape of the survey site,
on the display (41), the measurement point calculated by the arithmetic processing unit (65) is displayed so as to be superimposed on real image of a landscape viewed through the display, and distance and angle measurements by the surveying instrument (2) are made according to a command input from the input unit (34) of the controller (3).

2. The survey system (1) according to Claim 1, wherein
the controller (3) includes an attaching portion (31) for attaching to the pole (5), and
the input unit (34) is a push switch, and the push switch is arranged so that a pushing direction is toward the attaching portion (31).

3. The survey system according to Claim 1 or 2, wherein the input unit (34) is arranged to enable the worker to make inputs within a range of motion of at least the worker's thumb and index finger while gripping the pole (5) in a state where the worker supports the pole (5) to which the controller (6) is attached.

4. The survey system (1) according to any one of Claims 1 to 3, wherein
the surveying instrument (2) includes a tracking unit (27) configured to automatically track the target (7), and is configured so that the target (7) is automatically tracked when the target is within a predetermined range from the measurement point, and position information of the target (7) is displayed in real time on the display (41).

5. The survey system (1) according to any one of Claims 1 to 4, wherein
the storage unit (64) and the arithmetic processing unit (65) are included in the surveying instrument (2).

6. The survey system (1) according to any one of Claims 1 to 5, wherein
the controller (3) is configured to be so small and compact that it entirely fits in a palm of a hand,
the input unit (34) is provided a position where a worker's thumb is placed on in a state where the worker grips the pole (5), so that the worker can operate the input unit (34) while gripping the pole,
the controller (3) is configured that while the worker grips the pole (5) with at least several fingers and the palm of one hand, the worker can perform switch operations with the remaining fingers.

## Patentansprüche

1. Vermessungssystem (1) mit:
einem Target (7);
einer Stange (5), an welcher das Target (7) angebracht ist;
einem Vermessungsinstrument (2), welches aufweist: eine Entfernungsmesseinheit (26), die dazu ausgebildet ist, eine Entfernung zu dem Target (7) zu messen, eine Winkelmesseinheit (21, 22), die dazu ausgebildet ist, einen vertikalen Winkel und einen horizontalen Winkel zu messen, in welche die Entfernungsmesseinheit (26) gerichtet ist, eine Antriebseinheit (23, 24), die dazu ausgebildet ist, einen vertikalen Winkel und einen horizontalen Winkel der Entfernungsmesseinheit (26) zum Einstellen von Winkeln anzutreiben, eine Kommunikationseinheit (28), und eine arithmetische Steuereinheit (25), welche dazu ausgebildet ist, Eingabebefehle auszuführen, und in der Lage ist, Entfernungs- und Winkelmessungen des Targets (7) durchzuführen;
einer Steuerung (3), die lösbar an der Stange (5) angebracht ist, mit einer Kommunikationseinheit (33) und einer Eingabeeinheit (34) für die Eingabe von Befehlen durch einen Arbeiter, und die dazu ausgebildet ist, durch Kommunikation mit dem Vermessungsinstrument (2) Befehle an das Vermessungsinstrument (2) zu senden;
einer Brillenvorrichtung (4) mit einer Kommunikationseinheit (44), einem Display (41) in Form eines schutzbrillenlinsenförmigen transmissiven Displays, das die Augen des Arbeiters bedeckt, einem Relativpositionserkennungssensor (45), der dazu ausgebildet ist, eine Position der Brillenvorrichtung im Raum mit einem an einem Referenzpunkt eingestellten Ursprung zu erkennen, und einem Relativrichtungserkennungssensor (46), der dazu ausgebildet ist, eine Richtung der Brillenvorrichtung im Raum mit einem auf den Referenzpunkt eingestellten Ursprung zu erkennen;
einer Speichereinheit (64), die dazu ausgebildet ist, einen Messpunkt an einem Vermessungsort zu speichern; und
einer arithmetischen Verarbeitungseinheit (65) mit einer Synchronmesseinheit (651), die dazu ausgebildet ist, Informationen über eine Position und eine Richtung der Brillenvorrichtung (4) zu empfangen und die Informationen mit Koordinaten des Messpunkts zu synchronisieren, **dadurch gekennzeichnet,**
**dass** das Vermessungsinstrument durch den Arbeiter an dem Referenzpunkt an dem Vermessungsort angeordnet wird,
**dass** die Brillenvorrichtung dazu ausgebildet ist, das Betrachten eines Videobildes zu ermöglichen, welches durch Überlagern und Synthetisieren mit einen realen Bild einer Landschaft des Vermessungsorts erhalten wird,
**dass** auf dem Display (41) der von der arithmetischen Verarbeitungseinheit (65) berechnete Messpunkt derart angezeigt wird, dass er dem realen Bild einer durch das Display betrachteten Landschaft überlagert ist, und Entfernungs- und Winkelmessungen durch das Vermessungsinstrument (2) gemäß einem von der Eingabeeinheit (34) der Steuerung (3) eingegebenen Befehls durchgeführt werden.

2. Vermessungssystem (1) nach Anspruch 1, bei welchem die Steuerung (3) einen Befestigungsbereich (31) zur Befestigung an der Stange (5) aufweist, und
die Eingabeeinheit (34) ein Druckschalter ist, und der Druckschalter so angeordnet ist, dass eine Drückrichtung in Richtung des Befestigungsbereichs (31) verläuft.

3. Vermessungssystem nach Anspruch 1 oder 2, bei welchem
die Eingabeeinheit (34) dazu angeordnet ist, dem Arbeiter zu ermöglichen, Eingaben innerhalb des Bewegungsbereichs zumindest des Daumens und des Zeigefingers des Arbeiters zu ermöglichen, während er die Stange (5) in einem Zustand greift, in welchem der Arbeiter die Stange (5), an welcher die Steuerung (3) befestigt ist, stützt.

4. Vermessungssystem (1) nach einem der Ansprüche 1 bis 3, bei welchem
das Vermessungsinstrument (2) eine Trackingeinheit (27) aufweist, die dazu ausgebildet ist, das Target (7) automatisch zu verfolgen, und derart ausgebildet ist, dass das Target (7) automatisch verfolgt wird, wenn sich das Target innerhalb eines vorbestimmten Bereichs von dem Messpunkt befindet, und Positionsinformationen des Targets (7) in Echtzeit auf dem Display (41) angezeigt werden.

5. Vermessungssystem (1) nach einem der Ansprüche 1 bis 4, bei welchem
die Speichereinheit (64) und die arithmetische Verarbeitungseinheit (65) in dem Vermessungsinstrument (2) enthalten sind.

6. Vermessungssystem (1) nach einem der Ansprüche 1 bis 5, bei welchem
die Steuerung (3) derart klein und kompakt ausgebildet ist, dass sie vollständig in eine Handfläche passt,
die Eingabeeinheit (34) an einer Position vorgesehen ist, auf welche in einem Zustand, in welchem der Arbeiter die Stange (5) greift, der Daumen eines Arbeiters platziert ist, so dass der Arbeiter die Eingabeeinheit (34) bedienen kann, während er die Stange greift,
die Steuerung (3) derart ausgebildet ist, dass, während der Arbeiter die Stange (5) mit zumindest mehreren Fingern und der Fläche einer Hand greift, der Arbeiter Schaltvorgänge mit den verbleibenden Fingern ausführen kann.

## Revendications

1. Système d'arpentage (1) comprenant :
une cible (7) ; un piquet (5) auquel la cible (7) est fixée ;
un instrument d'arpentage (2) comportant une unité de mesure de distance (26) configurée pour mesurer une distance jusqu'à la cible (7), une unité de mesure d'angle (21, 22) configurée pour mesurer un angle vertical et un angle horizontal sous lesquels l'unité de mesure de distance (26) est orientée, une unité d'entraînement (23, 24) configurée pour entraîner selon un angle vertical et un angle horizontal de l'unité de mesure de distance (26) pour régler les angles, une unité de communication (28), et une unité de commande arithmétique (25) configurée pour mettre en œuvre des commandes d'entrée et capable d'effectuer des mesures de distance et d'angle de la cible (7) ;
une commande (3) attachée de façon détachable au piquet (5), comportant une unité de communication (33) et une unité d'entrée (34) pour entrer des commandes par un ouvrier et configurée pour transmettre des commandes à l'instrument d'arpentage (2) en communiquant avec l' instreument d'arpentage (2);
un dispositif de lunettes (4) comportant une unité de communication (44), un dispositif d'affichage (41) qui est un dispositif d'affichage transmetteur ayant la forme de lentilles de lunettes, qui couvre les yeux de l'ouvrier, un capteur (45) de détection de position relative configuré pour détecter une position du dispositif de lunettes (4) dans l'espace avec un point d'origine placé à un point de référence, et un capteur de détection de direction relative (46) configuré pour détecter une direction du dispositif de lunettes dans l'espace avec un point d'origine fixée au point de référence ;
une unité de stockage (64) configuré pour stocker un point de mesure sur un site d'arpentage; et
une unité de traitement arithmétique (65) comprenant une unité de mesure synchrone (651) configurée pour recevoir des informations suruneposition etune direction du dispositif de lunettes (4) et synchroniser les informations avec de s coordonnées du point de mesure, **caractérisé en ce que**
l'instrument d'arpentage est installé par l'ouvrier au point de référence sur le site d'arpentage, le dispositif de lunettes est configuré pour rendre possible l'observation d'une image vidéo obtenue en superposant et synthétisant une image virtuelle sur une image réelle d'un paysage du site d'arpentage,
sur le dispositif d'affichage (41), le point de mesure calculé par l'unité de traitement arithmétique (65) est affiché de façon à être superposé sur l'image réelle d'un paysage vue à travers le dispositif d'affichage, et des mesurages de la distance et de l'angle par l'instrument d'arpentage (2) sont fait selon une commande d'entrée provenant de l'unité d'entrée (34) de la commande (3).

2. Système d'arpentage (1) selon la revendication 1, la commande (3) comportant une partie de fixation (31) pour la fixer au piquet (5) et
l'unité de saisie (34) étant un commutateur à bouton-poussoir, et le commutateur à bouton-poussoir étant agencé de façon qu'une direction de pousse soit vers la partie de fixation (31).

3. Système d'arpentage (1) selon la revendication 1 ou 2, l'unité de saisie (34) étant agencé pour permettre à l'ouvrier de faire des entrées dans unrayon de mouvement d'au moins le pouce du travailleur et l'index tout en saisissant le piquet (5) dans un état où le travailleur prend en charge le piquet (5) auquel le régulateur (6) est attaché.

4. Système d'arpentage (1) selon l'une des revendications 1 à 3,
l'instrument d'arpentage (2) comprenant un unité de suivi (27) configurée pour suivre automatiquement la cible (7) et étant configuré de façon que la cible (7) soit automatiquement suivie quand la cible est dans un rayon prédéterminé depuis le point de mesure, et des informations de position de la cible (7) étant affichées en temps réel sur le dispositif d'affichage (41).

5. Système d'arpentage (1) selon l'une des revendications 1 à 4,
l'unité de stockage (64) et l'unité de traitement arithmétique (65) étant compris dans l'instrument d'arpentage (2).

6. Système d'arpentage (1) selon l'une des revendications 1 à 5,
la commande (3) étant configurée pour être si petite et compacte qu'elle tienne entièrement dans une paume d'une main,
l'unité d'entrée (34) étant pourvue d'une position où le pouce de l'ouvrier est posé dans un état où l'ouvrier saisit le piquet (5), de façon que l'ouvrier puisse faire fonctionner l'unité de saisie (34) tout en saisissant le piquet,
la commande (3) étant configurée de façon que, pendant que l'ouvrier saisit le piquet (5) avec au moins plusieurs doigts et la paume d'une main, le travailleur puisse effectuer des opérations de commutation avec les doigts restants.
